(19) Europäisches Patentamt
European Patent Office
Office européen des brevets

(11) EP 4 227 359 A1

(12) EUROPEAN PATENT APPLICATION
published in accordance with Art. 153(4) EPC

(43) Date of publication:
**16.08.2023 Bulletin 2023/33**

(21) Application number: **21877744.9**

(22) Date of filing: **08.10.2021**

(51) International Patent Classification (IPC):
***C08L 23/00*** *(2006.01)* ***C08K 5/134*** *(2006.01)*
***C08K 5/3435*** *(2006.01)*

(52) Cooperative Patent Classification (CPC):
**C08K 5/134; C08K 5/3435; C08L 23/00**

(86) International application number:
**PCT/JP2021/037318**

(87) International publication number:
**WO 2022/075445 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.10.2020 JP 2020170623**

(71) Applicant: **ADEKA CORPORATION**
**Arakawa-ku**
**Tokyo**
**116-8554 (JP)**

(72) Inventors:
- **YAMASHITA Kenji**
**Saitama-shi, Saitama 336-0022 (JP)**
- **HIDANO Tomohiro**
**Saitama-shi, Saitama 336-0022 (JP)**
- **UEDA Marina**
**Saitama-shi, Saitama 336-0022 (JP)**
- **AYABE Takashi**
**Saitama-shi, Saitama 336-0022 (JP)**

(74) Representative: **Müller-Boré & Partner**
**Patentanwälte PartG mbB**
**Friedenheimer Brücke 21**
**80639 München (DE)**

# (54) POLYOLEFIN RESIN COMPOSITION, MOLDED ARTICLE USING SAME, AND METHOD FOR PRODUCING POLYOLEFIN RESIN COMPOSITION

(57) A polyolefin-based resin composition of the present invention contains a polyolefin-based resin (A) and a light stabilizer (B), in which the light stabilizer (B) includes a predetermined hindered amine compound (B-1) and a predetermined phenol-based antioxidant (B-2), where the polyolefin-based resin composition is composed such that a value of the brightness increase ratio [L* (2,040 h) - L* (0 h) ] /L* (0 h) before and after the weather resistance test is -0.05 or more and less than 0.1.

EP 4 227 359 A1

## Description

TECHNICAL FIELD

The present invention relates to a polyolefin-based resin composition, a molded article using the same, and a production method for a polyolefin-based resin composition.

BACKGROUND ART

Various developments have so far been made on polyolefin-based resin compositions. As a technique in this field, for example, the technique described in Patent Document 1 is known. Patent Document 1 describes a polyolefin-based resin composition containing a polyolefin-based resin, a hindered amine compound, and a phenol-based antioxidant.

RELATED DOCUMENT

PATENT DOCUMENT

[Patent Document 1] International Publication No. WO2015/44785

SUMMARY OF THE INVENTION

TECHNICAL PROBLEM

However, as a result of studies by the inventors of the present invention, it was revealed that the polyolefin-based resin composition described in Patent Document 1 has room for improvement in terms of weather resistance.

SOLUTION TO PROBLEM

As a result of further studies, the inventors of the present invention found that the weather resistance of a polyolefin-based resin composition containing a polyolefin-based resin and a light stabilizer can be improved by suitably controlling the degree of the change in color tone in a weather resistance test.

As a result of further diligent studies, it was found that in a polyolefin-based resin composition containing a predetermined hindered amine compound and a phenol-based antioxidant, in a case of employing the brightness increase ratio before and after the weather resistance test for a predetermined period of time, that is, [L* (2,040 h) - L* (0 h)]/L* (0 h), as an index of the degree of the change in color tone, it is possible to stably evaluate weather resistance characteristics, and in a case of setting such an index within a predetermined range, it is possible to improve the weather resistance of the polyolefin-based resin composition, whereby the present invention was completed.

According to the present invention, there is provided a polyolefin-based resin composition including a polyolefin-based resin (A) and a light stabilizer (B), in which the light stabilizer (B) includes a hindered amine compound (B-1) and a phenol-based antioxidant (B-2), the hindered amine compound (B-1) includes one or two or more compounds represented by General Formula (1), the phenol-based antioxidant (B-2) includes one or two or more compounds represented by General Formula (2), and L* (0 h) and L* (2,040 h) in the polyolefin-based resin composition, which are obtained according to the following procedure, satisfy -0.05 ≤ [L* (2,040 h) - L* (0h)]/L* (0 h) < 0.1.

[chem. 1]

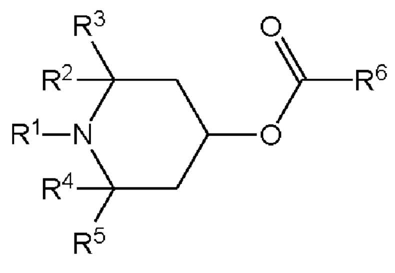

(1)

(In General Formula (1), $R^1$ represents a hydrogen atom or a methyl group, $R^2$ to $R^5$ each independently represent an

alkyl group having 1 to 6 carbon atoms, and $R^6$ represents a fatty acid residue having 7 to 29 carbon atoms.)

[chem. 2]

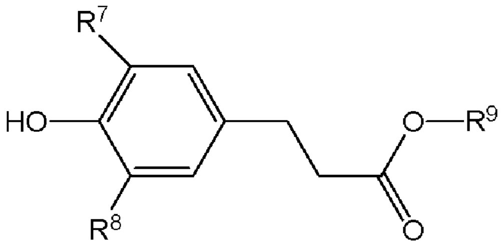

(2)

(In General Formula (2), $R^7$ and $R^8$ each independently represent an alkyl group having 1 to 6 carbon atoms, and $R^9$ represents a fatty acid residue having 7 to 29 carbon atoms.)

The calculation method for L* (0 h) and L* (2,040 h) is as follows.

(1) The polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm.
(2) The test piece is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (0 h).
(3) Using a weather resistance tester, the test piece is subjected to a weather resistance test for 2,040 hours under conditions of an irradiation intensity of 0.55 $W/m^2$ at a wavelength of 340 nm, continuous irradiation, a black panel temperature of 89°C ± 3°C, and no rainfall.
(4) The test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (2,040 h).

Further, according to the knowledge of the inventors of the present invention, it was found that in a polyolefin-based resin composition containing a predetermined hindered amine compound and a phenol-based antioxidant, in a case of employing a color difference ΔE after the weather resistance test for a predetermined period of time, as an index of the degree of the change in color tone in the weather resistance test, it is possible to stably evaluate weather resistance characteristics, and in a case of setting such an index within a predetermined range, it is possible to improve the weather resistance of the polyolefin-based resin composition.

According to the present invention, there is provided a polyolefin-based resin composition including a polyolefin-based resin (A) and a light stabilizer (B), in which the light stabilizer (B) includes a hindered amine compound (B-1) and a phenol-based antioxidant (B-2), the hindered amine compound (B-1) includes one or two or more compounds represented by General Formula (1), the phenol-based antioxidant (B-2) includes one or two or more compounds represented by General Formula (2), and a value of ΔE in the polyolefin-based resin composition, which is obtained according to the following procedure, is 0.05 or more and 2.0 or less.

A calculation method for ΔE is as follows.

(1) The polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm.
(2) The test piece is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (0 h), a* (0 h), and b* (0 h), respectively.
(3) Using a weather resistance tester, the test piece is subjected to a weather resistance test for 2,040 hours under conditions of an irradiation intensity of 0.55 $W/m^2$ at a wavelength of 340 nm, continuous irradiation, a black panel temperature of 89°C ± 3°C, and no rainfall.
(4) The test piece after being subjected to the weather resistance test is placed on a white calibration plate, a reflected color measurement is carried out using a colorimeter according to an SCI method (including regularly

reflected light) under conditions of a light source of D65 and a viewing angle of 10°, an L* value, an a* value, and a b* value are calculated from obtained tristimulus values X, Y, and Z, and these calculated values are defined as L* (2,040 h), a* (2,040 h), and b* (2,040 h), respectively.
(5) ΔE is calculated according to the following expression.

$$\Delta E = [\{L^* (2{,}040\ h) - L^* (0\ h)\}^2 + \{a^* (2{,}040\ h) - a^* (0\ h)\}^2 + \{b^* (2{,}040\ h) - b^* (0\ h)\}^2]^{1/2}$$

In addition, according to the present invention, there is provided a production method for a polyolefin-based resin composition, including a step of blending a polyolefin-based resin (A) and a light stabilizer (B) so that L* (0 h) and L* (2,040 h) in the polyolefin-based resin composition, which are obtained according to the above-described procedure, satisfy $-0.05 \leq [L^* (2{,}040\ h) - L^* (0\ h)]/L^* (0\ h) < 0.1$, to obtain a polyolefin-based resin composition, in the light stabilizer (B) includes a hindered amine compound (B-1) and a phenol-based antioxidant (B-2), the hindered amine compound (B-1) includes one or two or more compounds represented by General Formula (1), and the phenol-based antioxidant (B-2) includes one or two or more compounds represented by General Formula (2).

Further, according to the present invention, there is provided a production method for a polyolefin-based resin composition, including a step of blending a polyolefin-based resin (A) and a light stabilizer (B) so that a value of ΔE in the polyolefin-based resin composition, which is obtained according to the above-described procedure, is 0.05 or more and 2.0 or less, to obtain a polyolefin-based resin composition, in which the light stabilizer (B) includes a hindered amine compound (B-1) and a phenol-based antioxidant (B-2), the hindered amine compound (B-1) includes one or two or more compounds represented by General Formula (1), and the phenol-based antioxidant (B-2) includes one or two or more compounds represented by General Formula (2).

ADVANTAGEOUS EFFECTS OF INVENTION

According to the present invention, there are provided a polyolefin-based resin composition having excellent weather resistance, a molded article using the same, and a production method for a polyolefin-based resin composition.

DESCRIPTION OF EMBODIMENTS

A polyolefin-based resin composition of the present embodiment will be outlined.

The polyolefin-based resin composition of the present embodiment contains a polyolefin-based resin (A) and a light stabilizer (B), in which the light stabilizer (B) includes a hindered amine compound (B-1) and a phenol-based antioxidant (B-2), the hindered amine compound (B-1) includes one or two or more compounds represented by General Formula (1), and the phenol-based antioxidant (B-2) includes one or two or more compounds represented by General Formula (2).

[chem. 3]

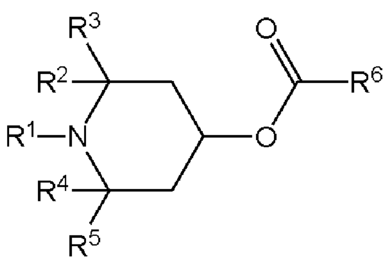

(1)

(In General Formula (1), $R^1$ represents a hydrogen atom or a methyl group, $R^2$ to $R^5$ each independently represent an alkyl group having 1 to 6 carbon atoms, and $R^6$ represents a fatty acid residue having 7 to 29 carbon atoms.)

[chem. 4]

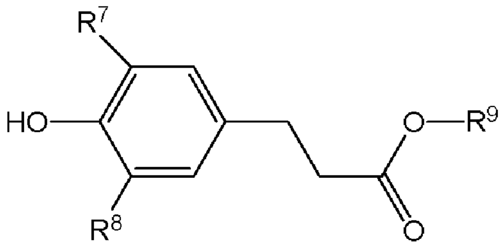

(2)

(In General Formula (2), $R^7$ and $R^8$ each independently represent an alkyl group having 1 to 6 carbon atoms, and $R^9$ represents a fatty acid residue having 7 to 29 carbon atoms.)

Such a polyolefin-based resin composition is composed such that L* (0 h) and L* (2,040 h) in the polyolefin-based resin composition, which are obtained according to the following procedure, satisfy -0.05 ≤ [L* (2,040 h) - L* (0 h)]/L* (0 h) < 0.1.

The lower limit of [L* (2,040 h) - L* (0 h)]/L* (0 h) is -0.05 or more, preferably -0.02 or more, and more preferably -0.01 or more.

On the other hand, the upper limit of [L* (2,040 h) - L* (0 h)]/ L* (0 h) is less than 0.1, preferably 0.09 or less, more preferably 0.07 or less, and still more preferably 0.06 or less.

In a case of being set within such a range, it is possible to improve the weather resistance of the polyolefin-based resin composition.

The lower limit of ΔE is 0.05 or more, preferably 0.08 or more, more preferably 0.1 or more, and still more preferably 0.2 or more.

On the other hand, the upper limit of ΔE is 2.0 or less, preferably 1.9 or less, more preferably 1.7 or less, and still more preferably 1.5 or less.

In a case of being set within such a range, it is possible to improve the weather resistance of the polyolefin-based resin composition.

[Calculation method for L* (0 h) and L* (2,040 h)]

(1) The polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm.
(2) The test piece is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (0 h) .
(3) Using a weather resistance tester, the test piece is subjected to a weather resistance test for 2,040 hours under conditions of an irradiation intensity of 0.55 $W/m^2$ at a wavelength of 340 nm, continuous irradiation, a black panel temperature of 89°C ± 3°C, and no rainfall.
(4) The test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (2,040 h).

[Calculation method for ΔE]

(1) The polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm.
(2) The test piece is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (0 h), a* (0 h), and b* (0 h), respectively.
(3) Using a weather resistance tester, the test piece is subjected to a weather resistance test for 2,040 hours under

conditions of an irradiation intensity of 0.55 W/$m^2$ at a wavelength of 340 nm, continuous irradiation, a black panel temperature of 89°C ± 3°C, and no rainfall.

(4) The test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (2,040 h), a* (2,040 h), and b* (2,040 h), respectively.

(5) ΔE is calculated according to the following expression.

$$\Delta E = [\{L^* (2{,}040\ h) - L^* (0\ h)\}^2 + \{a^* (2{,}040\ h) - a^* (0\ h)\}^2 + \{b^* (2{,}040\ h) - b^* (0\ h)\}^2]^{1/2}$$

In addition, the value of L* (0 h) is, for example, 50 or less, and it is preferably 40 or less and more preferably 30 or less. This makes it possible to provide a polyolefin-based resin composition having more excellent long-term weather resistance.

In the present embodiment, it is possible to control the brightness increase ratio [L* (2,040 h) - L* (0 h)] /L* (0 h), the color difference ΔE, and the L* (0 h), for example, by suitably selecting the kind and blending amount of each component contained in the polyolefin-based resin composition and the preparation method for a polyolefin-based resin composition. Among these, examples of the element for setting the brightness increase ratio [L* (2,040 h) - L* (0 h)]/L* (0 h), the color difference ΔE, and the L* (0 h) in a desired numerical range include using the predetermined hindered amine compound (B-1) and the predetermined phenol-based antioxidant (B-2) in combination; suitably adjusting the content of the light stabilizer (B) with respect to 100 parts by mass of the polyolefin-based resin (A) or the blending ratio of phenol-based antioxidant (B-2) to hindered amine compound (B-1); and suitably adjusting, as necessary, the combination or blending ratio of the polyolefin-based resin, black-based pigment, filler to be used.

Hereinafter, the polyolefin-based resin composition of the present embodiment will be described in detail.

The polyolefin-based resin composition contains one or two or more polyolefin-based resins (A).

Examples of the polyolefin-based resin (A) include polyethylene-based resins such as low-density polyethylene, linear low-density polyethylene, high-density polyethylene, crosslinked polyethylene, and ultra-high molecular weight polyethylene, polypropylene-based resins such as homopolypropylene, random copolymer polypropylene, block copolymer polypropylene, impact copolymer polypropylene, high impact copolymer polypropylene, and maleic anhydride-modified polypropylene, α-olefin copolymers such as polybutene-1, a cycloolefin polymer, poly-3-methyl-1-butene, poly-3-methyl-1-pentene, and poly-4-methyl-1-pentene, and α-olefin copolymers such as an ethylene-methyl methacrylate copolymer and an ethylene-vinyl acetate copolymer. The polyolefin-based resin is not particularly limited regarding the molecular weight, the degree of polymerization, the density, the softening point, the proportion of insoluble substances in a solvent, the degree of stereoregularity, the presence or absence of catalyst residues, the kind or blending ratio of raw material monomers, and the kind of catalyst to be used in the polymerization (for example, a Ziegler catalyst or a metallocene catalyst), which are appropriately selected.

The polyolefin-based resin (A) may contain one or two or more polyolefin-based thermoplastic elastomers. In this case, a molded article that is obtained by molding the polyolefin-based resin composition has excellent impact resistance. Specific examples of the polyolefin-based thermoplastic elastomer include an ethylene-propylene copolymer elastomer, an ethylene-propylene-diene copolymer elastomer, an ethylene-1-butene copolymer elastomer, an ethylene-1-hexene copolymer elastomer, an ethylene-1-octene copolymer elastomer, and a propylene-1-butene copolymer elastomer.

In a case where the polyolefin-based resin (A) contains a polyolefin-based thermoplastic elastomer, the total content thereof is, for example, 50% by mass or less of the total polyolefin-based resin (A), where it is preferably 30% by weight or less and more preferably 20% by weight or less.

The polyolefin-based resin (A) may include a polypropylene-based resin. In this case, the heat resistance of the polyolefin-based resin composition becomes more excellent.

Among the polypropylene-based resins, block copolymer polypropylene, impact copolymer polypropylene, or high impact copolymer polypropylene may be used, and in particular, impact copolymer polypropylene may be used.

In addition to the polyolefin-based resin (A), the polyolefin-based resin composition may include other resins. Examples of the other resins include a polyamide-based resin, a polyester-based resin, a polyacetal resin, polylactic acid, polyphenylene sulfide, a polycarbonate resin, a styrene-based resin, an acrylic resin, a urethane-based resin, a halogen-containing resin, a petroleum resin, a coumarone resin, polyvinyl alcohol, polyvinyl acetate, and polyphenylene oxide.

In a case where the other resins are blended, the blending amount thereof is, for example, 50 parts by mass

or less in total with respect to 100 parts by mass of the polyolefin-based resin (A), where it is preferably 30 parts by weight or less and more preferably 20 parts by weight.

The polyolefin-based resin composition may contain an elastomer other than the polyolefin-based thermoplastic elastomer. In this case, a molded article that is obtained by molding the polyolefin-based resin composition has excellent impact resistance. Examples of the elastomer other than the polyolefin-based thermoplastic elastomer include synthetic rubbers such as isoprene rubber, butadiene rubber, acrylonitrile-butadiene copolymer rubber, styrene-butadiene copolymer rubber, fluororubber, and silicone rubber, and thermoplastic elastomers other than the polyolefin-based thermoplastic elastomer, such as a polystyrene-based thermoplastic elastomer, a polyvinyl chloride-based thermoplastic elastomer, a polyurethane-based thermoplastic elastomer, a polyester-based thermoplastic elastomer, and a polyamide-based thermoplastic elastomer. Among these, a thermoplastic elastomer other than the polyolefin-based thermoplastic elastomer is preferable from the viewpoint that the processability of the polyolefin-based resin composition is more excellent and a molded article obtained by molding the polyolefin-based resin composition is more lightweight.

In a case where an elastomer other than the polyolefin-based thermoplastic elastomer is blended, the blending amount thereof is, for example, 50 parts by mass or less in total with respect to 100 parts by mass of the polyolefin-based resin (A), where it is preferably 30 parts by weight or less and more preferably 20 parts by weight.

The lower limit of the content of the polyolefin-based resin (A) in the polyolefin-based resin composition is, for example, 10% by mass or more, preferably 50% by mass or more, and more preferably 70% by mass or more in 100% by mass of the polyolefin-based resin composition. On the other hand, the upper limit of the content of the polyolefin-based resin (A) in the polyolefin-based resin composition is not particularly limited; however, it is favorable to be, for example, 99.99% by mass.

The polyolefin-based resin composition contains the light stabilizer (B).

In the polyolefin-based resin composition, it suffices that the lower limit of the content of the light stabilizer (B) with respect to 100 parts by mass of the polyolefin-based resin (A) is, for example, 0.01 parts by mass or more, which is preferably 0.05 parts by mass or more and more preferably 0.1 parts by mass or more. It suffices that the upper limit of the content of such a light stabilizer (B) is, for example, 10 parts by mass or less, which is preferably 5 parts by mass or less, more preferably 3 parts by mass or less, and still more preferably 1 part by mass or less.

In this case, the light stabilizer (B) includes at least the hindered amine compound (B-1) and the phenol-based antioxidant (B-2) and may further include the benzoate compound (B-3) as necessary.

The light stabilizer (B) includes the hindered amine compound (B-1) .

The hindered amine compound (B-1) includes one or two or more compounds represented by General Formula (1).

[chem. 5]

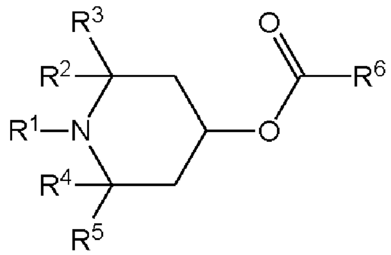

(1)

(In General Formula (1), $R^1$ represents a hydrogen atom or a methyl group, $R^2$ to $R^5$ each independently represent an alkyl group having 1 to 6 carbon atoms, and $R^6$ represents a fatty acid residue having 7 to 29 carbon atoms.)

Examples of the alkyl group having 1 to 6 carbon atoms include a methyl group, an ethyl group, a propyl group, an isopropyl group, a butyl group, an isobutyl group, a sec-butyl group, a tert-butyl group, a pentyl group, a sec-pentyl group, a tert-pentyl group, and a hexyl group. Among these, a methyl group, a tert-butyl group, or a tert-pentyl group is preferable, and a methyl group is particularly preferable.

The fatty acid residue having 7 to 29 carbon atoms is, for example, an alkyl group having 7 to 29 carbon atoms or an alkenyl group having 7 to 29 carbon atoms, where it is preferably an alkyl group having 9 to 25 carbon atoms and more preferably an alkyl group having 11 to 21 carbon atoms.

Among such alkyl groups, for example, a decyl group, an undecyl group, a dodecyl group, a tridecyl group, a tetradecyl group, a pentadecyl group, a hexadecyl group, a heptadecyl group, an octadecyl group, or a nonadecyl group may be used.

In the compound represented by General Formula (1), $R^1$ is preferably a methyl group. In this case, the polyolefin-based resin composition has still better weather resistance and still better NOx resistance as well.

The compound represented by General Formula (1) is obtained, for example, by reacting piperidinols with a fatty acid.

The fatty acid may be, for example, a saturated fatty acid or an unsaturated fatty acid, and one or more straight-chain fatty acids or branched-chain fatty acids may be used. As a purifying method for a fatty acid, distillation, recrystallization, a method using a filtering material, a method using an adsorbent, or the like can be appropriately used.

The hindered amine compound (B-1) may include, for example, one or two or more compounds selected from the group consisting of the following compounds, No. A1 to No. A6.

[chem. 6]

Chemical No. A1

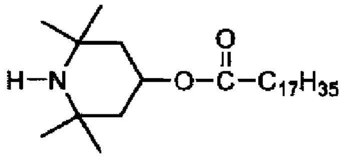

Chemical No. A4

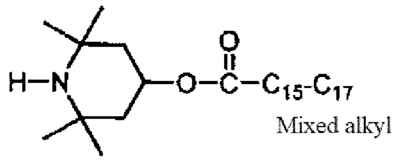

Mixed alkyl groups

Chemical No. A2

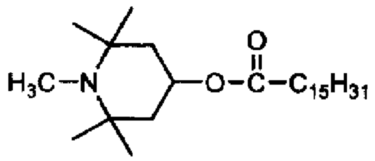

Chemical No. A5

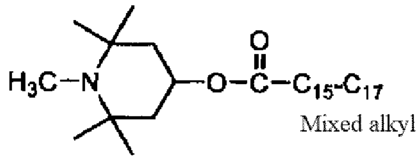

Mixed alkyl groups

Chemical No. A3

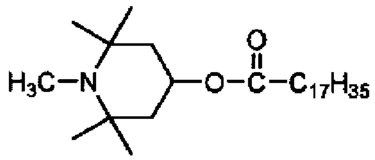

Chemical No. A6

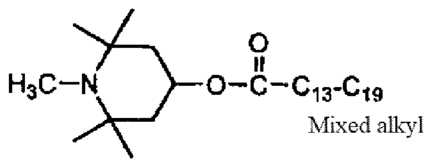

Mixed alkyl groups

The light stabilizer (B) includes the phenol-based antioxidant (B-2) .

The phenol-based antioxidant (B-2) includes one or two or more compounds represented by General Formula (2).

[chem. 7]

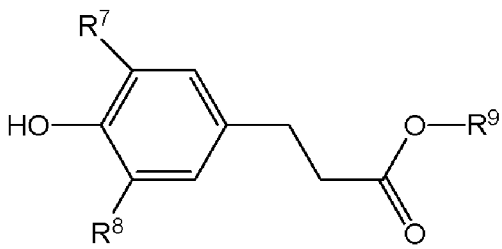

(2)

(In General Formula (2), $R^7$ and $R^8$ each independently represent an alkyl group having 1 to 6 carbon atoms, and $R^9$ represents a fatty acid residue having 7 to 29 carbon atoms.)

As the alkyl group having 1 to 6 carbon atoms in General Formula (2), those exemplified as the alkyl group having 1 to 6 carbon atoms in General Formula (1) can be used. The alkyl group having 1 to 6 carbon atoms in General Formula (2) is preferably a methyl group, a tert-butyl group, or a tert-pentyl group, and a tert-butyl group is particularly preferable.

As the fatty acid residue having 7 to 29 carbon atoms in General Formula (2), those exemplified as the fatty acid residue having 7 to 29 carbon atoms in General Formula (1) can be used. The fatty acid residue having 7 to 29 carbon atoms is preferably an alkyl group having 8 to 22 carbon atoms and more preferably an alkyl group having 14 to 20 carbon atoms.

The contents of the hindered amine compound (B-1) and the phenol-based antioxidant (B-2) in the light stabilizer (B) are, for example, 50% by mass or more, preferably 70% by mass or more, and more preferably 90% by mass or more in 100% by mass of the light stabilizer (B).

In the polyolefin-based resin composition, the blending ratio (B-2)/(B-1)) of the phenol-based antioxidant (B-2) to the hindered amine compound (B-1) is, for example, 0.1 or more and 4.0 or less, preferably 0.15 or more and 2.5 or less, and more preferably 0.2 or more and 1.5 or less in terms of mass. In a case of being set within such a range, the weather resistance can be further enhanced.

The light stabilizer (B) may include the benzoate compound (B-3) .

In addition, the benzoate compound (B-3) may include one or two or more compounds represented by General Formula (3).

[chem. 8]

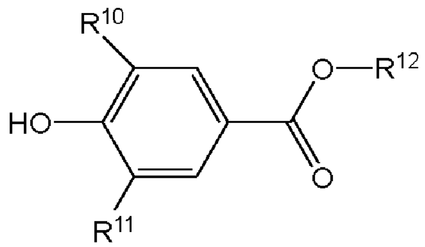

(3)

(In General Formula (3), $R^{10}$ and $R^{11}$ each independently represent an alkyl group having 1 to 6 carbon atoms, and $R^{12}$ represents a fatty acid residue having 7 to 29 carbon atoms.)

As the alkyl group having 1 to 6 carbon atoms in General Formula (3), those exemplified as the alkyl group having 1 to 6 carbon atoms in General Formula (1) can be used. The alkyl group having 1 to 6 carbon atoms in General Formula (3) is preferably a methyl group, a tert-butyl group, or a tert-pentyl group, and a tert-butyl group is particularly preferable.

As the fatty acid residue having 7 to 29 carbon atoms in General Formula (3), those exemplified as the fatty acid residue having 7 to 29 carbon atoms in General Formula (1) can be used. The fatty acid residue having 7 to 29 carbon atoms is preferably an alkyl group having 8 to 22 carbon atoms and more preferably an alkyl group having 10 to 20 carbon atoms.

The benzoate compound (B-3) may include, for example, one or two or more compounds selected from the group consisting of the following compounds, No. C1 to No. C5.

[chem. 9]

Chemical No. C1

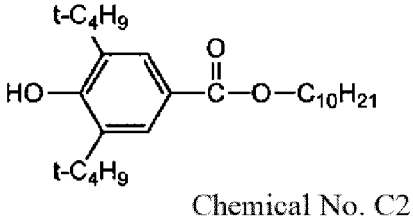

Chemical No. C4

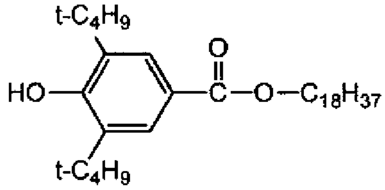

Chemical No. C2

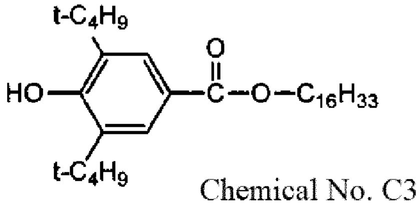

Chemical No. C5

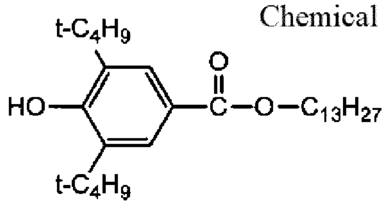

Chemical No. C3

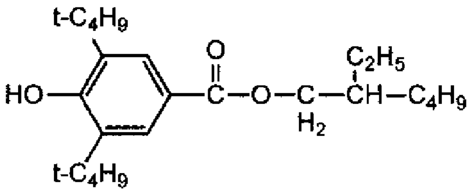

The content of the benzoate compound (B-3) is, for example, 0.01 parts by mass or more and 5 parts by mass or less and preferably 0.02 parts by mass or more and 0.5 parts by mass with respect to 100 parts by mass of the polyolefin-based resin (A).

In the polyolefin-based resin composition, it is possible to blend a generally used resin additive within a range in which the effect of the present invention is not impaired. Examples of the resin additive include a phosphorus-based antioxidant, a thioether-based antioxidant, an ultraviolet absorbing agent, a nucleating agent, a flame retardant, a flame retardant aid, a lubricating agent, a filler, a metallic soap, hydrotalcites, an antistatic agent, a pigment, and a dye.

Examples of the phosphorus-based antioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite bis(2,4-dicumylphenyl)pentaerythritol diphosphite, tetra(tridecyl)isopropylidene diphenol diphosphite, tetra(tridecyl)-4,4'-n-butylidenebis(2-tert-butyl -5-methylphenol) diphosphite, hexa(tridecyl)-1,1,3-tris(2-methyl-4-hydroxy-5-tert-butylphenyl) butane triphosphite, tetrakis(2,4-ditert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-ditert-butylphenyl)fluorophosphite, tris(2-[(2,4,8,10-tetrakis-tert-butyldibenzo[d,f][1,3,2]dioxapho sphepin-6-yl)oxy]ethyl)amine, and a phosphite of 2-ethyl-2-butylpropylene and 2,4,6-tri-tert-butylphenol.

Examples of the thioether-based antioxidant include tetrakis[methylene-3-(laurylthio)propionate]methane, bis(methyl-4-[3-n-alkyl(C12/C14)thiopropionyloxy] 5-tert-butyl phenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-tert-butyl-m-cresol), and distearyl-disulfide.

Examples of the ultraviolet absorbing agent include a benzophenone-based ultraviolet absorbing agent, a benzotriazole-based ultraviolet absorbing agent, a triazine-based ultraviolet absorbing agent, a salicylic acid ester-based ultraviolet absorbing agent, and a cyanoacrylate-based ultraviolet absorbing agent. These may be used alone, or two or more thereof may be used in combination.

A known benzophenone-based ultraviolet absorbing agent is used; however, examples thereof include 2,4-dihydroxybenzophenone 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, 2-hydroxy-4-tert-butyl-4'-(2-methacryloyloxyethoxyethoxy)benzoph enone, 5,5'-methylenebis(2-hydroxy-4-methoxybenzophenone), and 2-hydroxy-4-methoxy-2'-carboxybenzophenone.

A known benzotriazole-based ultraviolet absorbing agent is used; however, examples thereof include

2-(2-hydroxy-5-methylphenyl)benzotriazole,
2-(2-hydroxy-5-tert-octylphenyl)benzotriazole,
2-(2-hydroxy-3,5-di-tert-butylphenyl)-5-chlorobenzotriazole,
2-(2-hydroxy-3-tert-butyl-5-methylphenyl)-5-chlorobenzotriazole,
2-(2-hydroxy-3-dodecyl-5-methylphenyl)benzotriazole,
2-(2-hydroxy-3-tert-butyl-5-alkoxycarbonylethylphenyl)triazole,
2-(2-hydroxy-3,5-dicumylphenyl)benzotriazole,
2,2'-methylenebis(4-tert-octyl-6-benzotriazolylphenol), a polyethylene glycol ester of
2-(2-hydroxy-3-tert-butyl-5-carboxyphenyl)benzotriazole, and
2-(2H-benzotriazol-2-yl)-4-6 bis(1-methyl-1-phenylethyl)phenol, as well as 2-(2H-benzotriazol-2-yl)-6-(dodecyl)-4-methylphenol, resorcinol monobenzoate, and
2,4-di-t-amylphenyl-3',5'-di-t-butyl-4'-hydroxybenzoate.

A known triazine-based ultraviolet absorbing agent is used; however, examples thereof include

2,4-bis(2,4-dimethylphenyl)-6-(2-hydroxy-4-octyloxyphenyl)-s-tri azine, 2,4,6,-tris(2-hydroxy-4-octyloxyphenyl)-1,3,5-triazine, 2-(2-hydroxy-4-octyloxyphenyl)-4,6-bis(2,4-dimethylphenyl)-1,3,5 -triazine,
2-[4,6-bis(2,4-dimethylphenyl)-1,3,5-triazin-2-yl]-5-(octyloxy)p henol, and
2-(4,6-diphenyl-1,3,5-triazin-2-yl)-5-(hexyloxy)phenol.

A known salicylic acid ester-based ultraviolet absorbing agent is used; however, examples thereof include ethylene glycol salicylate, phenyl salicylate, octyl salicylate, benzyl salicylate, p-tert-butylphenyl salicylate, and homomenthyl salicylate.

A known cyanoacrylate-based ultraviolet absorbing agent is used; however, examples thereof include ethyl-$\alpha$-cyano-$\beta$,$\beta$-diphenyl acrylate and methyl-2-cyano-3-methyl-3-(p-methoxyphenyl)acrylate.

Examples of the nucleating agent include carboxylic acid metal salts such as sodium benzoate, a 4-tert-butylbenzoic acid aluminum salt, sodium adipate, and disodium bicyclo[2.2.1]heptane-2,3-dicarboxylate, phosphoric acid ester metal salts such sodium bis(4-tert-butylphenyl)phosphate, sodium-2,2'-methylenebis(4,6-di-tert-butylphenyl)phosphate, and lithium-2,2'-methylenebis(4,6-di-tert-butylphenyl)phosphate, polyhydric alcohol derivatives such as dibenzylidene sorbitol, bis(methylbenzylidene)sorbitol, bis(3,4-dimethylbenzylidene)sorbitol, bis(p-ethylbenzylidene)sorbitol, and bis(dimethylbenzylidene)sorbitol, and amide compounds such as N,N',N''-tris[2-methylcyclohexyl]-1,2,3-propanetricarboxamide, N,N',N''-tricyclohexyl-1,3,5-benzenetricarboximide, N,N'-dicyclohexylnaphthalene dicarboxamide, and 1,3,5-tri(2,2-dimethylpropanamido)benzene.

Examples of the flame retardant include aromatic phosphoric acid esters such as triphenyl phosphate, tricresyl phosphate, trixylenyl phosphate, cresyldiphenyl phosphate, cresyl-2,6-dixylenyl phosphate, resorcinol bis(diphenyl phosphate), (1-methylethylidene)-4,1-phenylenetetraphenyl diphosphate, 1,3-phenylenetetrakis(2,6-dimethylphenyl)phosphate, trade name ADEKA STAB FP-500 manufactured by ADEKA Corporation, trade name ADEKA STAB FP-600 manufactured by ADEKA Corporation, and trade name ADEKA STAB FP-800 manufactured by ADEKA Corporation; phosphonic acid esters such as divinyl phenylphosphonate, diallyl phenylphosphonate, and (1-butenyl)phenylphosphonate, phosphinic acid esters such as phenyl diphenylphosphinate, methyl diphenylphosphinate, and a 9,10-dihydro-9-oxa-10-phosphaphenanthrene-10-oxide derivative; phosphazene compounds such as bis(2-allylphenoxy)phosphazene and dicresyl phosphazene, phosphorus-based flame retardants such as melamine phosphate, melamine pyrophosphate, melamine polyphosphate, melam polyphosphate, ammonium polyphosphate, piperazine phosphate, piperazine pyrophosphate, piperazine polyphosphate, a phosphorus-containing vinylbenzyl compound, and red phosphorus; metal hydroxides such as magnesium hydroxide and aluminum oxide; and bromine-based flame retardants such as a brominated bisphenol A-type epoxy resin, a brominated phenol novolak-type epoxy resin, hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, and a brominated polyphenylene ether, a brominated polystyrene, as well as 2,4,6-tris (tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with an anti-drip agent such as a fluororesin or with a flame retardant aid such as polyhydric alcohol or hydrotalcite.

The lubricating agent is added for the intended purpose of imparting lubricity to the surface of the molded body and enhancing the scratch-preventing effect. Examples of the lubricating agent include unsaturated fatty acid amides

such as oleic acid amide and erucic acid amide; and saturated fatty acid amides such as behenic acid amide and stearic acid amide. One kind of these may be used alone, or two or more kinds thereof may be used in combination.

Examples of the filler include silica, talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, alumina, potassium titanate whiskers, wollastonite, and fibrous magnesium oxysulfate, where the particle diameter (the fiber diameter, the fiber length, or the aspect ratio in the fibrous shape) can be appropriately selected and used. In addition, as the filler, the one that has been subjected to a surface treatment can be used as necessary.

Examples of the metallic soap include a fatty acid metal salt having 1 to 40 carbon atoms. Examples of the fatty acid of the fatty acid metal salt include saturated fatty acids such as acetic acid, propionic acid, butyric acid, valeric acid, isovaleric acid, caproic acid, enanthic acid, caprylic acid, pelargonic acid, capric acid, 2-ethylhexanoic acid, undecyl acid, lauric acid, tridecyl acid, myristic acid, pentadecylic acid, palmitic acid, margaric acid, stearic acid, nonadecylic acid, arachidic acid, heneicosylic acid, behenic acid, tricosylic acid, lignoceric acid, cerotic acid, montanoic acid, and melissic acid; linear unsaturated fatty acids such as 4-decenoic acid, 4-dodecenoic acid, palmitoleic acid, $\alpha$-linolenic acid, linoleic acid, $\gamma$-linolenic acid, stearidonic acid, petroselinic acid, oleic acid, elaidic acid, vaccenic acid, eicosapentaenoic acid, docosapentaenoic acid, and docosahexaenoic acid and; and aromatic fatty acids such as trimesic acid. In the present invention, an aliphatic group having 7 to 21 carbon atoms is preferable, and a saturated fatty acid such as myristic acid, stearic acid, or 12-hydroxystearic acid is particularly preferable.

Examples of the metal of the fatty acid metal salt include an alkali metal, magnesium, calcium, strontium, barium, titanium, manganese, iron, zinc, silicon, zirconium, yttrium, barium, and hafnium. Among these, an alkali metal such as sodium, lithium, or potassium is particularly preferably used.

The hydrotalcites are composite salt compounds consisting of magnesium, aluminum, a hydroxyl group, a carbonate group, and any water of crystallization, which are known as natural or synthetic products, and examples thereof include those obtained by substituting a part of magnesium or aluminum with metals such as an alkali metal and zinc and those obtained by substituting hydroxyl groups or carbonate groups with other anionic groups.

The hydrotalcites may be ones obtained by dehydrating water of crystallization, and they may be ones coated with a higher fatty acid such as stearic acid, a higher fatty acid metal salt such as an oleic acid alkali metal salt, an organic sulfonic acid metal salt such as a dodecylbenzenesulfonic acid metal salt, a higher fatty acid amide, a higher fatty acid ester, wax, or the like.

The hydrotalcites may be natural products or may be synthetic products. Examples of the method of synthesizing such compounds include known methods described in Japanese Examined Patent Publication No. S46-2280, Japanese Examined Patent Publication No. S50-30039, Japanese Examined Patent Publication No. S51-29129, Japanese Examined Patent Publication No. H03-36839, Japanese Unexamined Patent Publication No. S61-174270, and Japanese Unexamined Patent Publication No. H05-179052. In addition, the hydrotalcites can be used without being restricted by the crystal structure, crystal particle, or the like thereof.

Examples of the antistatic agent include cationic antistatic agents such as a fatty acid quaternary ammonium ion salt and a polyamine quaternary salt; anionic antistatic agents such as a higher alcohol phosphate salt, a higher alcohol EO adduct, a polyethylene glycol fatty acid ester, an anionic alkylsulfonic acid salt, a higher alcohol sulfuric acid salt, a sulfuric acid salt of a higher alcohol ethylene oxide adduct, and a phosphoric acid salt of a higher alcohol ethylene oxide adduct; nonionic antistatic agents such as a polyhydric alcohol fatty acid ester, and a polyglycol phosphoric acid ester, a polyoxyethylene alkyl allyl ether; and amphoteric antistatic agents such as an amphoteric alkyl betaine such as a betaine alkyldimethylaminoacetate, and an imidazoline-type amphoteric surfactant. Such an antistatic agent may be used alone, or two or more antistatic agents may be used in combination.

A commercially available pigment can also be used as the pigment, and examples thereof include Pigment Red 1, 2, 3, 9, 10, 14, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, 254; Pigment Orange 13, 31, 34, 36, 38, 43, 46, 48, 49, 51, 52, 55, 59, 60, 61, 62, 64, 65, 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, 185; Pigment Green 7, 10, 36; Pigment Blue 15, 15:1, 15:2, 15:3, 15:4, 15:5, 15:6, 22, 24, 56, 60, 61, 62, 64; and Pigment Violet 1, 19, 23, 27, 29, 30, 32, 37, 40, 50. In addition, a black-based pigment such as a black pigment, a dark gray pigment, a light beige pigment, or a light gray pigment may also be used as the pigment.

The polyolefin-based resin composition is obtained, for example, by mixing the above components and subjecting the resultant mixture to melting and kneading.

Specifically, the production method for a polyolefin-based resin composition may include a step of carrying out dry blending with a mixer such as a Henschel mixer or a tumbler and carrying out kneading at a processing temperature of 100°C to 280°C using an extruder, a Banbury mixer, a roll, a Brabender plastograph, a kneader, or the like. It is preferable to use a Henschel mixer as the mixer and an extruder, particularly a twin-screw extruder, as the processing

machine.

One example of the production method for a polyolefin-based resin composition of the present embodiment includes a step of blending a polyolefin-based resin (A) and a light stabilizer (B) so that L* (0 h) and L* (2,040 h) in the polyolefin-based resin composition, which are obtained according to the above-described procedure, satisfy $-0.05 \leq$ [L* (2,040 h) - L* (0 h)]/L* (0 h) < 0.1, to obtain a polyolefin-based resin composition.

Another example of the production method for a polyolefin-based resin composition of the present embodiment includes a step of blending a polyolefin-based resin (A) and a light stabilizer (B) so that a value of $\Delta E$ in the polyolefin-based resin composition, which is obtained according to the above-described procedure, is 0.05 or more and 2.0 or less, to obtain a polyolefin-based resin composition.

In the blending step, the blending amount of the light stabilizer (B) with respect to 100 parts by mass of the polyolefin-based resin (A) is, for example, 0.01 parts by mass or more and 10 parts by mass or less, where the blending proportion is favorable to be preferably 0.1 parts by mass or more and 1 part by mass or less.

The light stabilizer (B) that is used in the production method for a polyolefin-based resin composition contains a polyolefin-based resin (A) and a light stabilizer (B), in which the light stabilizer (B) includes a hindered amine compound (B-1) and a phenol-based antioxidant (B-2), the hindered amine compound (B-1) includes one or two or more compounds represented by General Formula (1), and the phenol-based antioxidant (B-2) includes one or two or more compounds represented by General Formula (2).

In the production method for a polyolefin-based resin composition, a masterbatch containing the polyolefin-based resin (A) and the light stabilizer (B) may be used. This masterbatch may be composed such that the content of the light stabilizer (B) is more than 10 parts by mass with respect to 100 parts by mass of the polyolefin-based resin (A).

Regarding the molding method, the polyolefin-based resin composition can be molded using a known molding method, and it is possible to use, for example, an injection molding method, an extrusion molding method, a blow molding method, a vacuum molding method, an inflation molding method, a calender molding method, a slush molding method, a dip molding method, or a foam molding method.

In this way, it is possible to obtain a molded article that is obtained by molding the polyolefin-based resin composition.

Examples of the use application of the polyolefin-based resin compositions include resin parts for automobiles, such as a bumper, a dashboard, an instrument panel, a molding, an interior surface material, and a packing; resin parts for household appliances, such as a refrigerator, a washing machine, and a vacuum cleaner; household goods such as a tableware, a bucket, and a bathing implement; connecting parts such as connectors; miscellaneous goods such as toys; storage containers such as a tank and a bottle; medical supplies such as a medical pack, a syringe, a catheter, and a medical tube; building materials such as a wall material, a flooring material, a window frame, and wallpaper; agricultural materials such as an electric wire covering material, a house, and a tunnel; food packaging materials such as a wrap and a tray; various molded articles such as a film and a sheet; and fibers.

The embodiments according to the present invention have been described above; however, these are examples according to the present invention, and thus it is possible to adopt various configurations other than the above. In addition, the present invention is not limited to the embodiments described above and modifications, improvements, and the like are included in the present invention in a range in which it is possible to achieve the purpose of the present invention.

Hereinafter, descriptions for examples of reference forms are appended.

1A. A polyolefin-based resin composition containing:

a polyolefin-based resin (A); and
a light stabilizer (B),
in which the light stabilizer (B) includes a hindered amine compound (B-1) and a phenol-based antioxidant (B-2),
the hindered amine compound (B-1) includes one or two or more compounds represented by General Formula (1),
the phenol-based antioxidant (B-2) includes one or two or more compounds represented by General Formula (2),
the content of the light stabilizer (B) with respect to 100 parts by mass of the polyolefin-based resin (A) is 0.01 parts by mass or more and 10 parts by mass or less, and
L* (0 h) and L* (2,040 h) in the polyolefin-based resin composition, which are obtained according to the following procedure, satisfy $-0.05 \leq$ [L* (2,040 h) - L* (0 h)]/L* (0 h) < 0.1.
[Calculation method for L* (0 h) and L* (2,040 h)]

(1) The polyolefin-based resin composition is subjected to injection molding under molding conditions of a resin temperature of 230°C and a mold temperature of 40°C to mold a rectangular sheet-shaped test piece having dimensions of 6.0 cm $\times$ 2.7 cm $\times$ 2 mm.
(2) The test piece is placed on a white calibration plate, a reflected color measurement is carried out using

a colorimeter according to an SCI method (including regularly reflected light) under conditions of a light source of D65 and a viewing angle of 10°, an L* value is calculated from obtained tristimulus values X, Y, and Z, and this calculated value is defined as L* (0 h) .
(3) Using a weather resistance tester, the test piece is subjected to a weather resistance test for 2,040 hours under conditions of an irradiation intensity of 0.55 W/m$^2$ at a wavelength of 340 nm, continuous irradiation, a black panel temperature of 89°C ± 3°C, and no rainfall.
(4) The test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (2,040 h).

2A. A polyolefin-based resin composition containing:

a polyolefin-based resin (A); and
a light stabilizer (B),
in which the light stabilizer (B) includes a hindered amine compound (B-1) and a phenol-based antioxidant (B-2),
the hindered amine compound (B-1) includes one or two or more compounds represented by General Formula (1),
the phenol-based antioxidant (B-2) includes one or two or more compounds represented by General Formula (2),
the content of the light stabilizer (B) with respect to 100 parts by mass of the polyolefin-based resin (A) is 0.01 parts by mass or more and 10 parts by mass or less, and
a value of ΔE in the polyolefin-based resin composition, which is obtained according to the following procedure, is 0.05 or more and 2.0 or less.
[Calculation method for ΔE]

(1) The polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm.
(2) the test piece is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (0 h), a* (0 h), and b* (0 h), respectively.
(3) Using a weather resistance tester, the test piece is subjected to a weather resistance test for 2,040 hours under conditions of an irradiation intensity of 0.55 W/m$^2$ at a wavelength of 340 nm, continuous irradiation, a black panel temperature of 89°C ± 3°C, and no rainfall.
(4) the test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (2,040 h), a* (2,040 h), and b* (2,040 h), respectively.
(5) ΔE is calculated according to the following expression.

$$\Delta E = [\{L^* (2{,}040\ h) - L^* (0\ h)\}^2 + \{a^* (2{,}040\ h) - a^* (0\ h)\}^2 + \{b^* (2{,}040\ h) - b^* (0\ h)\}^2]^{1/2}$$

3A. The polyolefin-based resin composition according to 1A or 2A, in which a value of L* (0 h) is 50 or less.
4A. The polyolefin-based resin composition according to any one of 1A to 3A, in which the light stabilizer (B) includes a benzoate compound (B-3), and the benzoate compound (B-3) includes one or two or more compounds represented by General Formula (3).
5A. The polyolefin-based resin composition according to any one of 1A to 4A, in which the polyolefin-based resin contains a polypropylene-based resin.
6A. A molded article that is obtained by molding the polyolefin-based resin composition according to any one of 1A to 5A.
7A. A production method for a polyolefin-based resin composition, including:

a step of blending the polyolefin-based resin (A) and the light stabilizer (B) so that the blending amount of the light stabilizer (B) with respect to 100 parts by mass of the polyolefin-based resin (A) is to be a blending proportion of 0.01 parts by mass or more and 10 parts by mass or less, to obtain a polyolefin-based resin composition in which L* (0 h) and L* (2,040 h) satisfy $-0.05 \leq$ [L* (2,040 h) - L* (0 h)]/L* (0 h) < 0.1, the L* (0 h) and the L* (2,040 h) being determined according to the following procedure,
in which the light stabilizer (B) includes a hindered amine compound (B-1) and a phenol-based antioxidant (B-2), the hindered amine compound (B-1) includes one or two or more compounds represented by General Formula (1), and
the phenol-based antioxidant (B-2) includes one or two or more compounds represented by General Formula (2).
[Calculation method for L* (0 h) and L* (2,040 h)]

(1) The polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm.
(2) The test piece is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (0 h).
(3) Using a weather resistance tester, the test piece is subjected to a weather resistance test for 2,040 hours under conditions of an irradiation intensity of 0.55 $W/m^2$ at a wavelength of 340 nm, continuous irradiation, a black panel temperature of 89°C ± 3°C, and no rainfall.
(4) The test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (2,040 h).

[Examples]

Hereinafter, the present invention will be described in detail with reference to Examples; however, the present invention is not limited to the description of these Examples.

<Production of polyolefin-based resin composition>

A polyolefin-based resin (A), a light stabilizer (B), a filler (C), a black-based pigment (D), and a lubricating agent (E) were respectively blended according to blending proportions shown in Tables 1 to 4. Using an extruder (manufactured by Japan Steel Works, Ltd., TEX28V), the resultant mixture was subjected to melting and kneading under the conditions of a melting temperature of 230°C and a screw speed of 150 rpm, followed by granulation and then drying at 60°C for 8 hours, to produce a pellet-shaped polyolefin-based resin composition.
Raw material information described in Table 1 to Table 4 is shown below.

Polyolefin-based resin (A)

· Homopolypropylene (A-1) (MFR (230°C, 2.16 kg) = 10 g/10 min)
· Impact copolymer polypropylene (A-2) (NOVATEC PP BC03B, manufactured by Japan Polypropylene Corporation)
· Ethylene-1-octene copolymer elastomer (A-3) (manufactured by Dow Chemical Company, Engage 8100)

Light stabilizer (B)

Hindered amine compound (B-1)

· A compound (B-1a) represented by the following chemical formula

[chem. 10]

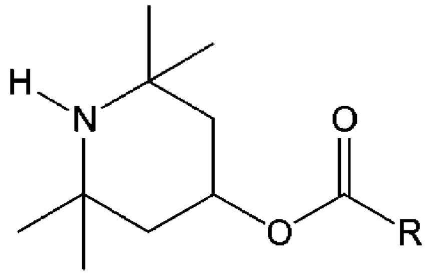

(B-1a)

Mixture of R=$C_{15}H_{31}$, $C_{17}H_{35}$

· A compound (B-1b) represented by the following chemical formula

[chem. 11]

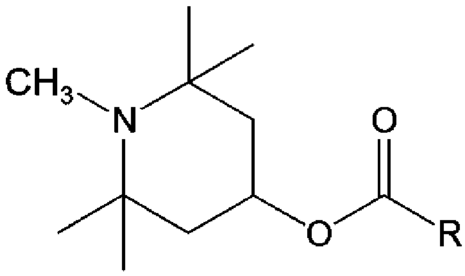

(B-1b)

Mixture of R=$C_{15}H_{31}$, $C_{17}H_{35}$

Phenol-based antioxidant (B-2)

· A compound (B-2a) represented by the following chemical formula

[chem. 12]

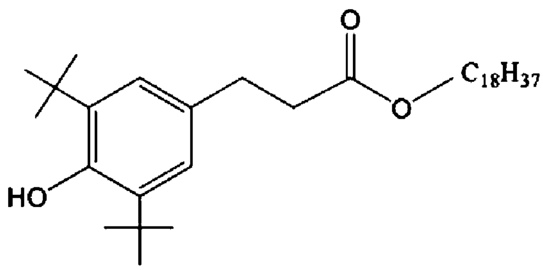

(B-2a)

· A compound (B-2b) represented by the following chemical formula

[chem. 13]

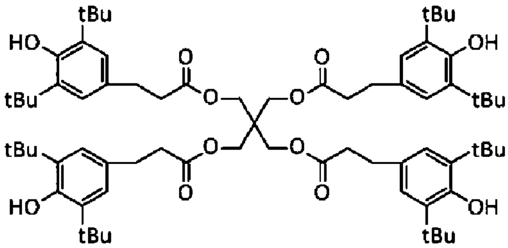

(B-2b)

· A compound (B-2c) represented by the following chemical formula

[chem. 14]

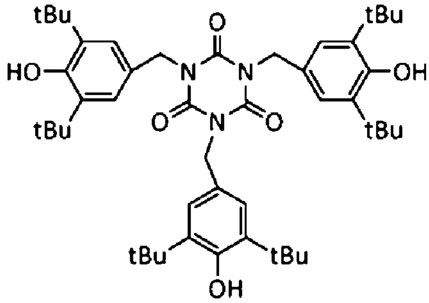

(B-2c)

Benzoate compound (B-3)

· A compound (B-3) represented by the following chemical formula

[chem. 15]

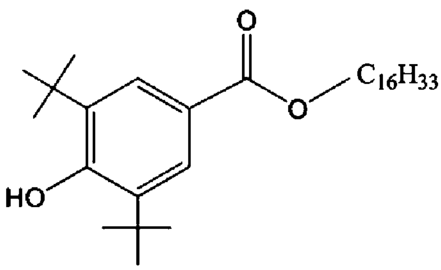

(B-3)

Filler (C)

· Talc (C-1) (manufactured by NIPPON TALC Co., Ltd., MICRO ACE P-4)

Black-based pigment (D)

· Masterbatch (D-1a) containing black pigment (manufactured by NP KASEI Co., Ltd., OM250)
· Masterbatch (D-1b) containing dark gray pigment (manufactured by NP Kasei Co., Ltd., PG0501)

- Masterbatch (D-1c) containing light beige pigment (manufactured by NP Kasei Co., Ltd., PC8501)
- Masterbatch (D-1d) containing light gray pigment (manufactured by NP Kasei Co., Ltd., PK8201)

Lubricating agent (E)

- Glycerol monostearate (E-1)
- Ethylene bis stearic acid amide (E-2)

[Table 1]

Table 1

| | | | Example 1 | Example 2 | Example 3 | Example 4 | Example 5 | Example 6 | Example 7 |
|---|---|---|---|---|---|---|---|---|---|
| Polyolefin-base resin (A) [parts by mass] | | (A-1) | | | | | | | |
| | | (A-2) | 70 | 70 | 70 | 70 | 70 | 70 | 70 |
| | | (A-3) | 10 | 10 | 10 | 10 | 10 | 10 | 10 |
| Light stabilizer (B) [parts by mass] | Hindered amine compound (B-1) | (B-1a) | 0.15 | 0.1 | 0.12 | 0.1 | 0.12 | 0.1 | 0.12 |
| | | (B-1b) | | | | | | | |
| | Phenol-based antioxidant (B-2) | (B-2a) | 0.1 | 0.05 | 0.03 | 0.05 | 0.03 | 0.05 | 0.03 |
| | | (B-2b) | | 0.05 | 0.05 | 0.05 | 0.05 | 0.05 | 0.05 |
| | Benzoate compound (B-3) | (B-3) | | | | | | | |
| Filler (C) [parts by mass] | | (C-1) | 20 | 20 | 20 | 20 | 20 | 20 | 20 |
| Black-based pigment (D) [parts by mass] | | (D-1a) | | | | | | | |
| | | (D-lb) | 3 | 3 | 3 | | | | |
| | | (D-1c) | | | | 3 | 3 | | |
| | | (D-1d) | | | | | | 3 | 3 |
| Lubricating agent (E) [parts by mass] | | (E-1) | | | | | | | |
| | | (E-2) | | | | | | | |
| L' (0 h) | | | 24.83 | 27.04 | 27.09 | 70.98 | 71.06 | 72.45 | 72.47 |
| L* (2,040 h) | | | 24.83 | 27.29 | 28.13 | 71.03 | 71.12 | 72.48 | 72.47 |
| a* (0 h) | | | 0.06 | -0.01 | -0.02 | 1.07 | 1.07 | 0.21 | 0.22 |
| a* (2,040 h) | | | 0.06 | -0.03 | 0.02 | 1.08 | 1.1 | 0.23 | 0.24 |
| b* (0 h) | | | -0.52 | -0.55 | -0.52 | 12.57 | 12.58 | 4.75 | 4.76 |
| b* (2,040 h) | | | -0.16 | -0.57 | -0.49 | 12.35 | 12.41 | 4.59 | 4.58 |
| [L* (2,040 h) - L* (0 h)]/L* (0 h) | | | 0 | 0.01 | 0.04 | 0.001 | 0.001 | 0.0004 | 0 |
| $\Delta$E | | | 0.4 | 0.3 | 1.0 | 0.2 | 0.2 | 0.2 | 0.2 |
| Cracking occurrence time (h) | | | 2760 | >3600 | 3480 | 2760 | 2520 | 3360 | 3240 |

[Table 2]

Table 2

| | | | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|
| Polyolefin-base resin (A) [parts by mass] | | (A-1) | | | | | | | | | | | |
| | | (A-2) | 70 | 70 | 70 | 70 | 70 | 70 | 70 | 70 | 70 | 70 | 70 |
| | | (A-3) | 10 | 10 | 10 | 10 | 10 | 10 | 10 | 10 | 10 | 10 | 10 |
| Light stabilizer (B) [parts by mass] | Hindered amine compound (B-1) | (B-1a) | 0.1 | 0.1 | 0.1 | 0.1 | 0.1 | | | | 0.1 | 0.1 | 0.1 |
| | | (B-1b) | | | | | | 0.1 | 0.1 | 0.1 | | | |
| | Phenol-based antioxidant (B-2) | (B-2a) | 0.1 | 0.1 | 0.1 | 0.1 | 0.1 | 0.1 | 0.1 | 0.1 | 0.1 | 0.1 | 0.1 |
| | | (B-2b) | | | | | | | | | | | |
| | Benzoate compound (B-3) | (B-3) | 0.05 | 0.05 | 0.05 | 0.05 | 0.05 | 0.05 | 0.05 | 0.05 | 0.05 | 0.05 | 0.05 |
| Filler (C) [parts by mass] | | (C-1) | 20 | 20 | 20 | 20 | 20 | 20 | 20 | 20 | 20 | 20 | 20 |
| Black-based pigment (D) [parts by mass] | | (D-1a) | | | | | | | | | 1 | 2 | |
| | | (D-1b) | 3 | 3 | 3 | 3 | 3 | 3 | 3 | 3 | | | 1 |
| | | (D-1c) | | | | | | | | | | | |
| | | (D-1d) | | | | | | | | | | | |
| Lubricating agent (E) [parts by mass] | | (E-1) | | | | 0.1 | 0.2 | | | 0.2 | | | |
| | | (E-2) | | 0.1 | 0.2 | | | | 0.2 | | | | |
| L* (0 h) | | | 24.7 | 24.32 | 24.89 | 25.14 | 24.67 | 23.9 | 24.16 | 24.54 | 25.65 | 24.39 | 27.46 |
| L* (2,040 h) | | | 25.2 | 25.26 | 25.26 | 25.29 | 24.89 | 25.29 | 25.53 | 25.17 | 25.68 | 24.64 | 27.32 |
| a* (0 h) | | | 0.05 | 0.15 | 0.06 | -0.05 | 0.04 | -0.02 | 0.14 | 0.03 | 0 | 0.02 | 0.14 |
| a* (2,040 h) | | | 0.09 | 0.09 | 0.09 | -0.04 | 0.06 | 0.09 | 0.11 | 0.08 | 0.13 | 0.04 | 0.01 |
| b* (0 h) | | | -0.6 | -0.48 | -0.5 | -0.38 | -0.43 | -0.46 | -0.43 | -0.51 | 0.02 | -0.05 | -0.16 |
| b* (2,040 h) | | | -0.23 | -0.22 | -0.13 | -0.12 | -0.27 | -0.03 | -0.1 | 0.02 | 0.55 | 0.29 | 0.49 |

(continued)

| | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|
| [L* (2,040 h) - L* (0 h)]/L* (0 h) | 0.02 | 0.04 | 0.01 | 0.01 | 0.01 | 0.06 | 0.06 | 0.03 | 0.001 | 0.01 | -0.01 |
| $\Delta$E | 0.6 | 1.0 | 0.5 | 0.3 | 0.3 | 1.5 | 1.4 | 0.8 | 0.5 | 0.4 | 0.7 |
| Cracking occurrence time (h) | > 3600 | > 3600 | > 3600 | > 3600 | > 3600 | > 3600 | > 3600 | > 3600 | > 3600 | > 3600 | > 3600 |

[Table 3]

Table 3

| | | | Comparative Example 1 | Comparative Example 2 | Comparative Example 3 |
|---|---|---|---|---|---|
| Polyolefin-base resin (A) [parts by mass] | | (A-1) | 100 | | |
| | | (A-2) | | 70 | 70 |
| | | (A-3) | | 10 | 10 |
| Light stabilizer (B) [parts by mass] | Hindered amine compound (B-1) | (B-1a) | 0.1 | 0.15 | |
| | | (B-1b) | | | |
| | Phenol-based antioxidant (B-2) | (B-2a) | 0.05 | | |
| | | (B-2b) | | 0.1 | |
| | Benzoate compound (B-3) | (B-3) | | | |
| Filler (C) [parts by mass] | | (C-1) | | 20 | 20 |
| Black-based pigment (D) [parts by mass] | | (D-1a) | | | 2 |
| | | (D-lb) | | 2 | |
| | | (D-1c) | | | |
| | | (D-1d) | | | |
| Lubricating agent (E) [parts by mass] | | (E-1) | | | |
| | | (E-2) | | | |
| L* (0 h) | | | 81.29 | 24.8 | 26.56 |
| L* (2,040 h) | | | 89.75 | 27.52 | 36.65 |
| a* (0 h) | | | 0.67 | 0.05 | 0.03 |
| a* (2,040 h) | | | -4.02 | 0.02 | 0.01 |
| b* (0 h) | | | 5.64 | -0.44 | -0.11 |
| b* (2,040 h) | | | 15.24 | -0.11 | 0.1 |
| [L* (2,040 h) - L* (0 h)]/L* (0 h) | | | 0.1 | 0.1 | 0.4 |
| ΔE | | | 13.6 | 2.7 | 10.1 |

(continued)

| | Comparative Example 1 | Comparative Example 2 | Comparative Example 3 |
|---|---|---|---|
| Cracking occurrence time (h) | 1320 | 1080 | 240 |

[Table 4]

Table 4

| | | | Example 19 | Example 20 |
|---|---|---|---|---|
| Polyolefin-base resin (A) [parts by mass] | | (A-1) | 100 | 100 |
| | | (A-2) | | |
| | | (A-3) | | |
| Light stabilizer (B) [parts by mass] | Hindered amine compound (B-1) | (B-1a) | | |
| | | (B-1b) | 0.4 | 0.05 |
| | Phenol-based antioxidant (B-2) | (B-2a) | 0.4 | 0.025 |
| | | (B-2b) | | |
| | | (B-2c) | | 0.025 |
| | Benzoate compound (B-3) | (B-3) | | |
| Filler (C) [parts by mass] | | (C-1) | | |
| Black-based pigment (D) [parts by mass] | | (D-1a) | | 1 |
| | | (D-1b) | | |
| | | (D-1c) | | |
| | | (D-1d) | | |
| Lubricating agent (E) [parts by mass] | | (E-1) | | |
| | | (E-2) | | |
| L* (0 h) | | | 87.38 | 24.33 |
| L* (2,040 h) | | | 86.82 | 24.48 |
| a* (0 h) | | | 0.23 | 0.01 |
| a* (2,040 h) | | | 0.32 | -0.02 |
| b* (0 h) | | | 4.61 | -0.60 |
| b* (2,040 h) | | | 3.80 | -0.43 |
| [L* (2,040 h) - L* (0 h)]/L* (0 h) | | | -0.01 | 0.01 |
| ΔE | | | 1.0 | 0.2 |
| Cracking occurrence time (h) | | | 1680 | > 3600 |

The obtained polyolefin-based resin composition was evaluated for the following items.

[Calculation method for L* (0 h) and L* (2,040 h)]

(1) Using an injection molding machine (manufactured by SHIBAURA MACHINE Co., Ltd., EC100-2A), the polyolefin-based resin composition was subjected to injection molding under molding conditions of a resin temperature of 230°C and a mold temperature of 40°C to form a rectangular sheet-shaped test piece having dimensions of 6.0 cm × 2.7 cm × 2 mm.

(2) The test piece obtained in this way was placed on a white calibration plate, a reflected color measurement was carried out using a colorimeter (device name: ColorEye 7000A, manufactured by X-Rite, Inc.) according to an SCI method (including regularly reflected light) under conditions of a light source of D65 and a viewing angle of 10°, an L* value was calculated from obtained tristimulus values X, Y, and Z, and this calculated value was defined as L* (0 h) .

(3) Using a weather resistance tester (device name: Ci 4000, manufactured by ATLAS Material Testing Technology), the test piece after the reflected color measurement was subjected to a weather resistance test for 2,040 hours under conditions of an irradiation intensity of 0.55 $W/m^2$ at a wavelength of 340 nm, continuous irradiation, a black panel temperature of 89°C ± 3°C, and no rainfall.

(4) The test piece after being subjected to the weather resistance test was placed on a white calibration plate, a reflected color measurement was carried out using a colorimeter (device name: ColorEye 7000A, manufactured by X-Rite, Inc.) according to an SCI method (including regularly reflected light) under conditions of a light source of D65 and a viewing angle of 10°, an L* value was calculated from obtained tristimulus values X, Y, and Z, and this calculated value was defined as L* (2,040 h).

(5) Using the obtained L* (0 h) and L* (2, 040 h), [L* (2, 040 h) - L* (0 h)]/L* (0 h) was calculated. The values are shown in Table 1, Table 2, and Table 3.

[Calculation method for ΔE]

(1) Using an injection molding machine (manufactured by SHIBAURA MACHINE Co., Ltd., EC100-2A), the resin composition was subjected to injection molding under molding conditions of a resin temperature of 230°C and a mold temperature of 40°C to mold a rectangular sheet-shaped test piece having dimensions of 6.0 cm × 2.7 cm × 2 mm.

(2) The test piece obtained in this way was placed on a white calibration plate, a reflected color measurement was carried out using a colorimeter (device name: ColorEye 7000A, manufactured by X-Rite, Inc.) according to an SCI method (including regularly reflected light) under conditions of a light source of D65 and a viewing angle of 10°, an L* value, an a* value, and a b* value were calculated from obtained tristimulus values X, Y, and Z, and these calculated values were defined as L* (0 h), a* (0 h), and b* (0 h), respectively.

(3) Using a weather resistance tester (device name: Ci 4000, manufactured by ATLAS Material Testing Technology), the test piece was subjected to a weather resistance test for 2,040 hours under conditions of an irradiation intensity of 0.55 $W/m^2$ at a wavelength of 340 nm, continuous irradiation, a black panel temperature of 89°C ± 3°C, and no rainfall.

(4) The test piece after being subjected to the weather resistance test was placed on a white calibration plate, a reflected color measurement was carried out using a colorimeter (device name: ColorEye 7000A, manufactured by X-Rite, Inc.) according to an SCI method (including regularly reflected light) under conditions of a light source of D65 and a viewing angle of 10°, an L* value, an a* value, and a b* value were calculated from obtained tristimulus values X, Y, and Z, and these calculated values were defined as L* (2,040 h), a* (2,040 h), and b* (2,040 h), respectively.

(5) ΔE was calculated according to the following expression.

The values are shown in Table 1, Table 2, and Table 3.

$$\Delta E = [\{L^* (2,040\ h) - L^* (0\ h)\}^2 + \{a^* (2,040\ h) - a^* (0\ h)\}^2 + \{b^* (2,040\ h) - b^* (0\ h)\}^2]^{1/2}$$

[Cracking occurrence time (h)]

A polyolefin-based resin composition was subjected to injection molding under the molding conditions of a resin temperature of 230°C and a mold temperature of 40°C to prepare a rectangular sheet-shaped test piece having dimensions of 6.0 cm × 2.7 cm × 2 mm.

Using a weather resistance tester (device name: Ci 4000, manufactured by ATLAS Material Testing Technology), the obtained test piece was subjected to a weather resistance test under the conditions of an irradiation intensity

of 0.55 W/m$^2$ at a wavelength of 340 nm, continuous irradiation, a black panel temperature of 89°C ± 3°C, and no rainfall, and the time taken from the start of the test to the occurrence of cracking on the surface of the test piece (cracking occurrence time (h)) was measured.

From the results, it was seen that in the polyolefin-based resin compositions of Examples 1 to 20, the cracking occurrence time is long, and the weather resistance is excellent as compared with the polyolefin-based resin compositions of Comparative Examples 1 to 3.

In addition, from the results, it was seen that in a case of comparing Examples 2, 4, and 6, in which the compositional ratios between the components (A) to (C) are the same, the black-based polyolefin-based resin composition in which the value of L* (0 h) is 50 or less has a more excellent weather resistance.

This application claims priority based on Japanese Patent Application No. 2020-170623 filed on October 8, 2020, and all contents of the disclosure are incorporated herein.

## Claims

**1.** A polyolefin-based resin composition comprising:

a polyolefin-based resin (A); and
a light stabilizer (B),
wherein the light stabilizer (B) includes a hindered amine compound (B-1) and a phenol-based antioxidant (B-2),
the hindered amine compound (B-1) includes one or two or more compounds represented by General Formula (1),
the phenol-based antioxidant (B-2) includes one or two or more compounds represented by General Formula (2), and
L* (0 h) and L* (2,040 h) in the polyolefin-based resin composition, which are obtained according to the following procedure, satisfy $-0.05 \leq [L^* (2{,}040\ h) - L^* (0\ h)]/L^* (0\ h) < 0.1$,

[chem. 1]

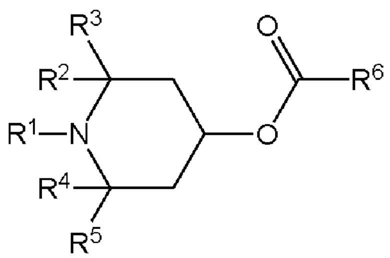

(1)

(in General Formula (1), R$^1$ represents a hydrogen atom or a methyl group, R$^2$ to R$^5$ each independently represent an alkyl group having 1 to 6 carbon atoms, and R$^6$ represents a fatty acid residue having 7 to 29 carbon atoms)

[chem. 2]

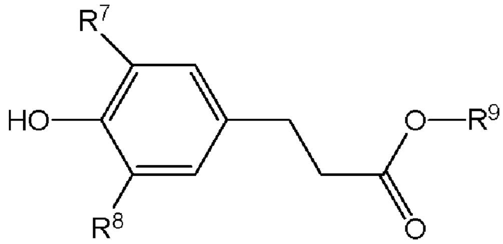

(2)

(in General Formula (2), R$^7$ and R$^8$ each independently represent an alkyl group having 1 to 6 carbon atoms, and R$^9$ represents a fatty acid residue having 7 to 29 carbon atoms)
[a calculation method for L* (0 h) and L* (2,040 h)]

(1) the polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm
(2) the test piece is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (0 h)
(3) using a weather resistance tester, the test piece is subjected to a weather resistance test for 2,040 hours under conditions of an irradiation intensity of 0.55 W/$m^2$ at a wavelength of 340 nm, continuous irradiation, a black panel temperature of 89°C ± 3°C, and no rainfall
(4) the test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (2,040 h).

**2.** A polyolefin-based resin composition comprising:

a polyolefin-based resin (A); and
a light stabilizer (B),
wherein the light stabilizer (B) includes a hindered amine compound (B-1) and a phenol-based antioxidant (B-2),
the hindered amine compound (B-1) includes one or two or more compounds represented by General Formula (1),
the phenol-based antioxidant (B-2) includes one or two or more compounds represented by General Formula (2), and
a value of ΔE in the polyolefin-based resin composition, which is obtained according to the following procedure, is 0.05 or more and 2.0 or less,
[a calculation method for ΔE]

(1) the polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm
(2) the test piece is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (0 h), a* (0 h), and b* (0 h), respectively
(3) using a weather resistance tester, the test piece is subjected to a weather resistance test for 2,040 hours under conditions of an irradiation intensity of 0.55 W/$m^2$ at a wavelength of 340 nm, continuous irradiation, a black panel temperature of 89°C ± 3°C, and no rainfall
(4) the test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (2,040 h), a* (2,040 h), and b* (2,040 h), respectively
(5) ΔE is calculated according to the following expression

$$\Delta E = [\{L^* (2,040\ h) - L^* (0\ h)\}^2 + \{a^* (2,040\ h) - a^* (0\ h)\}^2 + \{b^* (2,040\ h) - b^* (0\ h)\}^2]^{1/2}.$$

[chem. 3]

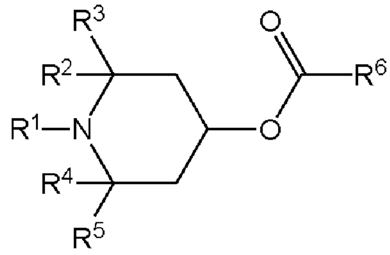

(1)

(in General Formula (1), $R^1$ represents a hydrogen atom or a methyl group, $R^2$ to $R^5$ each independently represent an alkyl group having 1 to 6 carbon atoms, and $R^6$ represents a fatty acid residue having 7 to 29 carbon atoms)

[chem. 4]

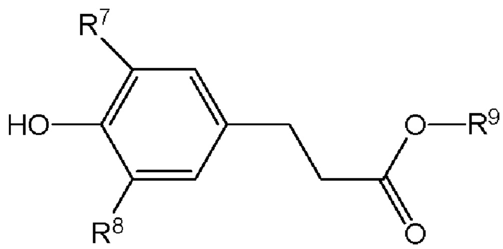

(2)

(in General Formula (2), $R^7$ and $R^8$ each independently represent an alkyl group having 1 to 6 carbon atoms, and $R^9$ represents a fatty acid residue having 7 to 29 carbon atoms).

**3.** The polyolefin-based resin composition according to Claim 1 or 2,
wherein the value of L* (0 h) is 50 or less.

**4.** The polyolefin-based resin composition according to any one of Claims 1 to 3,

wherein the light stabilizer (B) includes a benzoate compound (B-3), and
the benzoate compound (B-3) includes one or two or more compounds represented by General Formula (3),

[chem. 5]

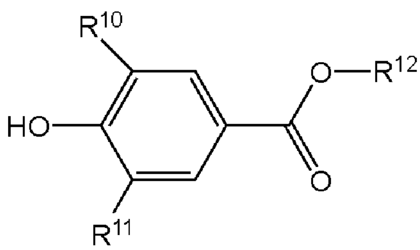

(3)

(in General Formula (3), $R^{10}$ and $R^{11}$ each independently represent an alkyl group having 1 to 6 carbon atoms, and $R^{12}$ represents a fatty acid residue having 7 to 29 carbon atoms).

**5.** The polyolefin-based resin composition according to any one of Claims 1 to 4,
wherein the polyolefin-based resin contains a polypropylene-based resin.

**6.** A molded article that is obtained by molding the polyolefin-based resin composition according to any one of Claims

1 to 5.

**7.** A production method for a polyolefin-based resin composition, comprising:

a step of blending a polyolefin-based resin (A) and a light stabilizer (B) so that L* (0 h) and L* (2,040 h) in the polyolefin-based resin composition, which are obtained according to the following procedure, satisfy $-0.05 \leq$ [L* (2,040 h) - L* (0 h)]/L* (0 h) $< 0.1$, to obtain a polyolefin-based resin composition,
wherein the light stabilizer (B) includes a hindered amine compound (B-1) and a phenol-based antioxidant (B-2),
the hindered amine compound (B-1) includes one or two or more compounds represented by General Formula (1), and
the phenol-based antioxidant (B-2) includes one or two or more compounds represented by General Formula (2),

[chem. 6]

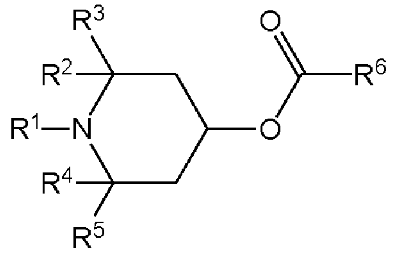

(1)

(in General Formula (1), $R^1$ represents a hydrogen atom or a methyl group, $R^2$ to $R^5$ each independently represent an alkyl group having 1 to 6 carbon atoms, and $R^6$ represents a fatty acid residue having 7 to 29 carbon atoms)

[chem. 7]

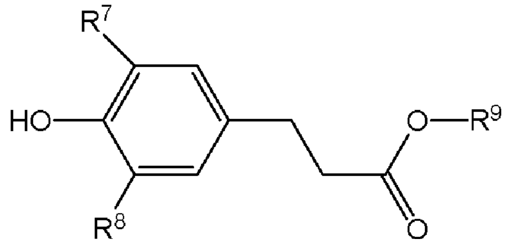

(2)

(in General Formula (2), $R^7$ and $R^8$ each independently represent an alkyl group having 1 to 6 carbon atoms, and $R^9$ represents a fatty acid residue having 7 to 29 carbon atoms)
[a calculation method for L* (0 h) and L* (2,040 h) ]

(1) the polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm
(2) the test piece is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (0 h)
(3) using a weather resistance tester, the test piece is subjected to a weather resistance test for 2,040 hours under conditions of an irradiation intensity of 0.55 W/$m^2$ at a wavelength of 340 nm, continuous irradiation, a black panel temperature of 89°C ± 3°C, and no rainfall
(4) the test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value is calculated from obtained tristimulus values X, Y, and Z, and this calculated value is defined as L* (2,040 h).

**8.** A production method for a polyolefin-based resin composition, comprising:

a step of blending a polyolefin-based resin (A) and a light stabilizer (B) so that a value of ΔE in the polyolefin-based resin composition, which is obtained according to the following procedure, is 0.05 or more and 2.0 or less, to obtain a polyolefin-based resin composition,
wherein the light stabilizer (B) includes a hindered amine compound (B-1) and a phenol-based antioxidant (B-2),
the hindered amine compound (B-1) includes one or two or more compounds represented by General Formula (1), and
the phenol-based antioxidant (B-2) includes one or two or more compounds represented by General Formula (2),

[chem. 8]

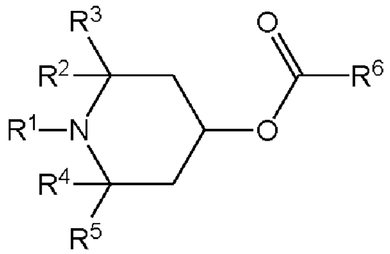

(1)

(in General Formula (1), $R^1$ represents a hydrogen atom or a methyl group, $R^2$ to $R^5$ each independently represent an alkyl group having 1 to 6 carbon atoms, and $R^6$ represents a fatty acid residue having 7 to 29 carbon atoms)

[chem. 9]

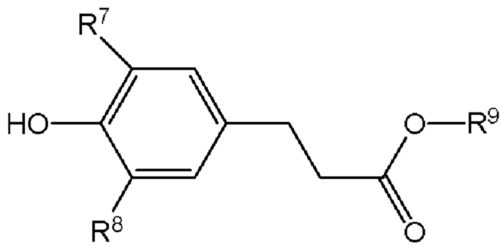

(2)

(in General Formula (2), $R^7$ and $R^8$ each independently represent an alkyl group having 1 to 6 carbon atoms, and $R^9$ represents a fatty acid residue having 7 to 29 carbon atoms).
[a calculation method for ΔE]

(1) the polyolefin-based resin composition is subjected to injection molding under molding conditions of a resin temperature of 230°C and a mold temperature of 40°C to mold a rectangular sheet-shaped test piece having dimensions of 6.0 cm × 2.7 cm × 2 mm
(2) the test piece is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (0 h), a* (0 h), and b* (0 h), respectively
(3) using a weather resistance tester, the test piece is subjected to a weather resistance test for 2,040 hours under conditions of an irradiation intensity of 0.55 W/$m^2$ at a wavelength of 340 nm, continuous irradiation, a black panel temperature of 89°C ± 3°C, and no rainfall
(4) the test piece after being subjected to the weather resistance test is placed on a white calibration plate, a reflected color measurement is carried out using a colorimeter according to an SCI method (including regularly reflected light) under conditions of a light source of D65 and a viewing angle of 10°, an L* value, an a* value, and a b* value are calculated from obtained tristimulus values X, Y, and Z, and these calculated values are defined as L* (2,040 h), a* (2,040 h), and b* (2,040 h), respectively
(5) ΔE is calculated according to the following expression

$$\Delta E = [\{L^* (2,040\ h) - L^* (0\ h)\}^2 + \{a^* (2,040\ h) - a^* (0\ h)\}^2 + \{b^* (2,040\ h) - b^* (0\ h)\}^2]^{1/2}.$$

## INTERNATIONAL SEARCH REPORT

International application No.
**PCT/JP2021/037318**

### A. CLASSIFICATION OF SUBJECT MATTER

***C08L 23/00***(2006.01)i; ***C08K 5/134***(2006.01)i; ***C08K 5/3435***(2006.01)i
FI: C08L23/00; C08K5/3435; C08K5/134

According to International Patent Classification (IPC) or to both national classification and IPC

### B. FIELDS SEARCHED

Minimum documentation searched (classification system followed by classification symbols)

C08K5/134; C08K5/3435; C08L23/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2018/070319 A1 (ADEKA CORP) 19 April 2018 (2018-04-19) | 1-8 |
| A | JP 2017-149852 A (ADEKA CORP) 31 August 2017 (2017-08-31) | 1-8 |
| A | WO 2014/115385 A1 (ADEKA CORPORATION) 31 July 2014 (2014-07-31) | 1-8 |
| A | JP 2016-531962 A (BASF SE) 13 October 2016 (2016-10-13) | 1-8 |
| A | JP 2017-518430 A (CYTEC INDUSTRIES INC) 06 July 2017 (2017-07-06) | 1-8 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/037318**

| Patent document cited in search report | Publication date (day/month/year) | Patent family member(s) | Publication date (day/month/year) |
|---|---|---|---|
| WO 2018/070319 A1 | 19 April 2018 | US 2020/0048430 A1 | |
| | | EP 3527617 A1 | |
| | | CN 109715723 A | |
| | | KR 10-2019-0068566 A | |
| | | TW 201829595 A | |
| JP 2017-149852 A | 31 August 2017 | (Family: none) | |
| WO 2014/115385 A1 | 31 July 2014 | US 2015/0353710 A1 | |
| | | EP 2949697 A1 | |
| | | CN 104937024 A | |
| | | KR 10-2015-0109362 A | |
| | | BR 112015017547 A | |
| | | TW 201430032 A | |
| JP 2016-531962 A | 13 October 2016 | US 2016/0244591 A1 | |
| | | WO 2015/044785 A2 | |
| | | EP 3049464 A1 | |
| | | CA 2923385 A1 | |
| JP 2017-518430 A | 06 July 2017 | US 2015/0315465 A1 | |
| | | WO 2015/168389 A1 | |
| | | EP 3137540 A1 | |
| | | TW 201546242 A | |
| | | CA 2947699 A1 | |
| | | KR 10-2016-0147279 A | |
| | | CN 106471049 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 201544785 A
- JP S462280 B
- JP S5030039 B
- JP S5129129 B
- JP H0336839 B
- JP S61174270 A
- JP H05179052 A
- JP 2020170623 A